# EUROPEAN PATENT APPLICATION

(11) **EP 4 525 138 A1**
(43) Date of publication of application: **19.03.2025**
(21) Application number: 23197525.1
(22) Date of filing: 14.09.2023
(51) Int. Cl.: H01M 10/613, H01M 10/615, H01M 10/63, H01M 10/643, H01M 10/6557, H01M 10/6568, H01M 10/657, H01M 50/213, H01M 50/291

(54) **DEVICE FOR THERMAL MANAGEMENT OF BATTERY CELLS OF A BATTERY AND BATTERY**

(71) Applicant: Röchling Automotive SE, 68165 Mannheim (DE)
(72) Inventor: Tremonti, Claudia, 39100 Bolzano (IT); Dill, Peter, 85051 Ingolstadt (DE); Collatuzzo, Enrico, 39055 Laives (IT); Monsorno, Davide, 38057 Pergine Valsugana (IT)
(74) Representative: Ullrich & Naumann PartG mbB

(57) **Abstract**

The invention relates to a device for thermal management of battery cells of a battery, comprising at least one polymer element, comprising one or more polymers, in particular thermoplastic, wherein said at least one polymer element comprises at least one fluid channel having an inlet and an outlet, wherein said at least one fluid channel is adapted such to provide a fluid flow in at least one direction, preferably in at least two directions, preferably in at three directions parallel to a main direction of extension of said polymer element, in particular wherein at least two of said three directions are parallel to each other.

## Description

The invention relates to a device for thermal management of battery cells of a battery comprising at least one polymer element, comprising one or more polymers.

The invention further relates to a battery comprising a plurality of battery cells.

The invention even further relates to a battery system, comprising a battery and a battery management system.

Devices for thermal managements of battery cells are for instance known from EP 3 525 279 A1. EP 3 525 279 A1 discloses a battery pack with a flexible foil, which can be integrated with or coupled to a heat exchanging member, wherein the heat exchanging member is arranged to fit around the plurality of battery cells. The heat exchanging member can comprise means for guiding a cooling liquid there through for enhancing the cooling. The means for guiding a cooling liquid can be arranged in the form of a cooling circuit. In addition, a heat pipe system can be employed for cooling the battery cells of the battery pack.

One of the disadvantages however is that the flexible foil has to be elaborately placed between the different battery cells. A further disadvantage is that an inefficient thermal management of the battery cells is provided with non-contact areas in which the flexible foil is not in contact with a surface of the battery cell. A further disadvantage is that due to the foil structure, i.e. the small thickness, the thermal contact between the battery cells depends on the pressure of the cooling liquid inside the associated heat exchanging member and therefore can be limited.

One of the objectives of the present invention is therefore to provide a device for thermal management of battery cells of a battery, a battery and a battery system, which allow an easy placement of the device, a larger contact area of the surface for the thermal management and a flexible and sufficient thermal management.

One of the further objectives of the present invention is to provide an alternative device for thermal management of battery cells of a battery, an alternative battery and an alternative battery system.

The above-mentioned objectives may be solved by a device for thermal management of battery cells of a battery comprising at least one polymer element, comprising one or more polymers, in particular thermoplastic, wherein said at least one polymer element comprises at least one fluid channel having an inlet and an outlet, wherein said at least one fluid channel is adapted such to provide a fluid flow in at least one direction, preferably in at least two directions, preferably in at least three directions, parallel to a main direction of extension of said at least one polymer element, in particular wherein at least two of said at least three directions are parallel to each other.

The above-mentioned objectives may be solved by a battery comprising a plurality of battery cells and at least a device according to one of the claims 1-10.

The above-mentioned objectives may be solved by a battery system comprising a battery according to one of the claims 11-14 and a battery management system, said battery management system being adapted to control provisioning of a coolant or heating fluid for the device, preferably based on a temperature of the battery.

One of the advantages that may be achieved by the present invention is that an easy placement of the device respective the battery cells is enabled. Further, a larger contact area of the surface for the thermal management may be achieved. Due to the polymer element, a flexible and sufficient thermal management while being cost-efficient may be achieved.

Further features, advantages and preferred embodiments are disclosed or may become apparent in the following.

According to a preferred embodiment, said at least one polymer element comprises at least one heating element, preferably wherein said heating element comprises at least one metal track for carrying electric current. This may allow for a more flexible thermal management of the battery. For instance, the battery cells can be heated when being used in cold or icy environments, thus providing enhanced performance in cold or icy environments.

According to a further preferred embodiment, said at least one heating element is meander-shaped, preferably wherein said at least one meander-shaped heating element comprises loops of at least two different diameters. This may allow for an effective distribution and transfer of the heat to the battery cells. Preferably, the at least one heating element comprises several turns having different lengths and/or diameters such that a uniform power density is provided. The path of the at least one heating track depends on the shape of the part.

According to a further preferred embodiment, said at least one polymer element is shaped such that at least 20%, preferably at least 30%, preferably at least 40%, preferably at least 50%, preferably at least 60%, preferably at least 70%, preferably at least 80%, preferably at least 90%, preferably covering all of a circumferential surface of a battery cell. Due to the covering at least in part of a circumferential surface of a battery, an effective thermal management may be achieved. The term "circumferential surface" is to be understood in its broadest sense and refers, in particular in the claims, preferably in the description not only to cylindrical shaped battery cells with a lateral surface but to any kind of surface, in particular delimited from the surface of the poles and suitable for transferring thermal energy.

According to a further preferred embodiment, said at least one heating element is provided in a wall of said at least one polymer element. This may enable a compact size of said at least one polymer element while enabling an effective transfer of thermal energy to the battery cell.

According to a further preferred embodiment, said at least one polymer element comprises at least two half-shells, materially bonded to each other. This may enable an easy manufacturing.

According to a further preferred embodiment, said at least two half-shells are adapted to provide at least one fluid channel between them. This may allow for an easy provision of the fluid channel.

According to a further preferred embodiment, said at least one polymer element comprises curved side walls extending along the at least one direction. This may allow for an effective transfer of thermal energy between e.g. a cylindrical shaped battery cell and the device. For instance, battery cells can be arranged along the main direction of extension with their symmetry axes perpendicular to the main direction of extension.

According to a further preferred embodiment, said curved side walls have concave form, in particular having a regular pattern of concave sections along the main direction of extension. This may allow for an adjacent arrangement of e.g. cylindrical battery cells.

According to a further preferred embodiment, sides of said at least one polymer element opposite to each other along the main direction of extension have concave sections displaced from one another. This may allow for a space saving arrangement of e.g. cylindrical battery cells in different rows opposite of each other.

According to a further preferred embodiment, said at least one fluid channel is adapted to provide a meander-shaped flow of the fluid. This may allow for an effective transfer of thermal energy from or to a battery cell over the whole contact surface between the device, in particular the polymer element and the battery cell.

According to a further preferred embodiment, said at least one polymer element comprises ribs extending from a side wall of said at least one polymer element and perpendicular to the main direction of extension into said at least one fluid channel, preferably wherein said ribs are rigid. This may allow for an effective guiding of the fluid inside the fluid channel further enhancing the transfer of thermal energy from or to the battery cell.

According to a further preferred embodiment, the inlet and outlet of said at least one fluid channel are located adjacent to each other, preferably on one of the side of the main direction of extension. This may allow for an easy connection of the fluid channel to a thermal management system providing the fluid for said fluid channel.

According to a further preferred embodiment, the at least one polymer element, in particular the side walls, are made of a flexible material. This may allow for an easy adaption to the shape of a surface of a battery cell further enhancing the transfer of thermal energy between the device and the battery cell.

According to a further preferred embodiment, said device is adapted to be fixed on a base and/or is adapted as a battery cell holder, in particular for cylindrically shaped battery cells. This may allow for a higher level of integration and flexibility of the device acting as battery cell holder or at least being attached to a battery cell holder.

According to a further preferred embodiment, a base for holding the battery cells is provided, wherein said device is arranged in particular releasably, on said base, preferably said base is integrally formed with said device. This allows for a higher level of integration and flexibility of the device being attached to a battery cell holder.

According to a further preferred embodiment, said at least one polymer element provides at least one mounting seat for a side surface of a battery cell along a main direction of extension of the battery cell. This allows for a higher level of integration and flexibility of the device acting also as a battery cell holder.

According to a further preferred embodiment, said mounting seat is shaped such that said mounting seat covers at least 20%, preferably at least 30%, preferably at least 40%, preferably at least 50%, preferably at least 60%, preferably at least 70%, preferably at least 80%, preferably at least 90%, preferably all of a circumferential surface of a battery cell when placed in said mounting seat. Due to the covering at least in part of a circumferential surface of a battery, an effective thermal management may be achieved.

There are several ways how to design and further develop the teaching of the present invention in an advantageous way. To this end, it is to be referred to the patent claims subordinate to the independent claims on the one hand and to the following explanation of further embodiments of the invention by way of example, illustrated by the figures on the other hand. In connection with the explanation of the further embodiments of the invention by the aid of the figures, generally further embodiments and further developments of the teaching will be explained.

In the drawings
- Fig. 1: shows a device for thermal management according to an embodiment of the present invention;
- Fig. 2: shows a heating device for a device for thermal management according to an embodiment of the present invention;
- Fig. 3: shows a device for thermal management according to an embodiment of the present invention;
- Fig. 4: shows a battery system according to an embodiment of the present invention; and
- Fig. 5: shows steps of a method for providing a device according to an embodiment of the present invention.

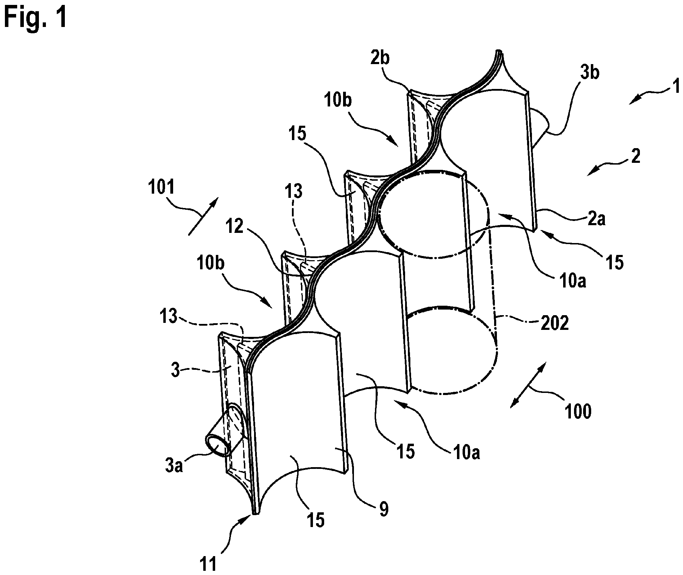

Figure 1 shows a device for thermal management according to an embodiment of the present invention.

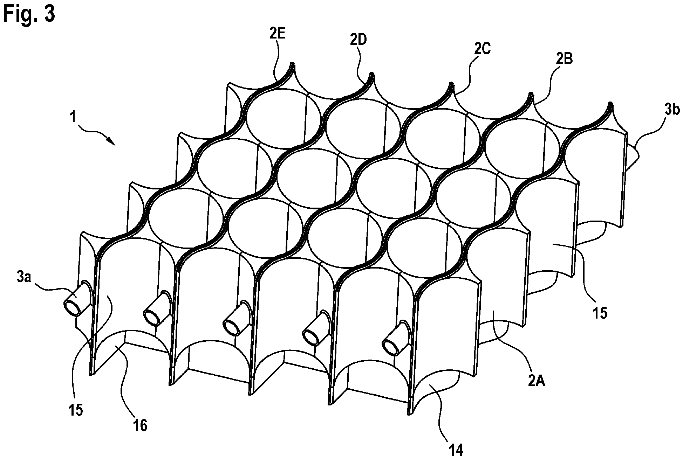

In Figure 1 a device 1 for thermal management is shown. The device 1 comprises a polymer element 2. The polymer element 2 in turn comprises two half-shells 2a, 2b welded or bonded together forming therein a fluid channel 3. The inlet 3a and the outlet 3b are on opposite sides along the main direction of extension 100 of the device 1. Along the main direction of extension 100 in the wall 9 concave forms 10a, 10b are arranged, which can act as mounting seats and which can cover at least 10%, preferably at least 20%, preferably at least 30%, preferably at least 40%, preferably at least 45% of half of the circumferential surface of a cylindrical shaped battery cell 202. When arranging a second polymer element (shown in Figure 3) along the main direction 100 adjacent to the first polymer element 2, the two concave forms 10a, 10b of the two polymer elements 2A, 2B can cover up to 100% of the circumferential surface of a cylindrical shaped battery cell 202. The concave forms 10a, 10b, when arranging in a regular manner, form a pattern 11 wherein the concave forms 10a, 10b on opposite sides of the polymer element 2 are offset by a radius of the battery cell 202 along the main direction of extension 100.

The polymer element 2 provides a meander-shaped flow 12, direction 101, along the main direction of extension 100, wherein for instance different levels perpendicular to the main direction of extension 100, i.e. vertical in Fig. 1, may allow flow in different directions parallel to the main direction of extension 100.

Inside the fluid channel 3, ribs 13 are extending perpendicular to the main direction of extension 100 providing the meander-shaped flow 12, in particular providing also a sufficient fluid flow 12 in the outer regions, i.e. in those regions adjacent to a further polymer element 2. Of course, other shapes of the ribs 13 for enabling an efficient fluid flow 12 are possible.

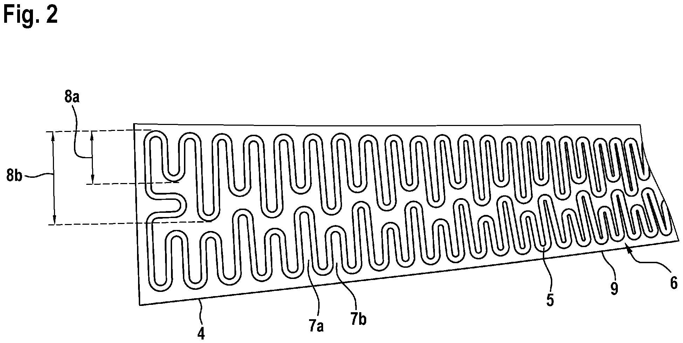

Figure 2 shows a heating device for a device for thermal management according to an embodiment of the present invention.

Figure 2 shows a heating device 4 in form of a flexible plastic foil with metal tracks 5 attached to or on it. The metal tracks 5 are meander-shaped and can be connected to an electrical source for providing current for heating The metal tracks 5 have also meander-shaped form 6 with loops 7a, 7b, wherein adjacent loops 7a, 7b have different diameter 8a, 8b. The foil or the metal tracks itself can be integrated into the wall 9 of a polymer element 2 or attached to it to provide thermal energy to a battery cell.

Figure 3 shows a device for thermal management according to an embodiment of the present invention.

Figure 3 shows a device for thermal management 1 comprising a plurality of polymer elements 2A, 2B, 2C. 2D, 2E adjacent to each other. The polymer elements 2A, 2B, 2C, 2D, 2E are attached to a base 14 for receiving the bottoms of cylindrical shaped battery cells 202. The base 14 can be releasably attached to the polymer elements 2A, 2B, 2C, 2D, 2E or can be integrated in part of a device for thermal management 1. The base 14 has a grid structure of rounded openings 16 for receiving and holding the bottom of a cylindrical shaped battery cell 202, which allows electrical contacting a pole of a battery cell 202 from below. Between the two adjacent polymer elements 2A, 2B; 2B, 2C; 2C, 2D; 2D, 2E mounting seats 15 are provided for receiving cylindrical shaped battery cells 202.

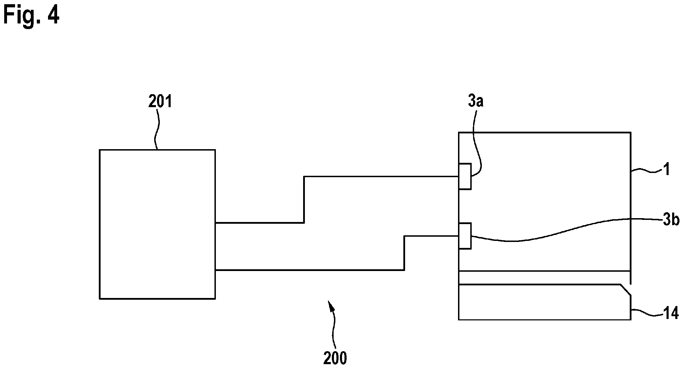

Figure 4 shows a battery system according to an embodiment of the present invention.

Figure 4 shows a battery system 200 comprising one or more devices for thermal management 1 attached to one or more bases 14. The battery system 200 comprises further a battery management system 201, which is connected to the inlet 3a and outlet 3b of one or more of the devices for thermal management 1. The battery management system 201 can provide current for heating elements 4 of devices 1 and cooling fluids via inlets 3a to cool the battery cells 202. Of course, the battery management system 201 may also be connected to different sensors to monitor the health status of the battery cells, e.g. temperature sensors, gas sensors or the like.

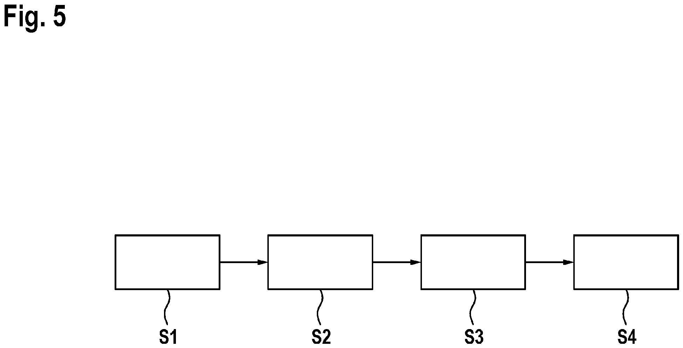

Figure 5 shows steps of a method for providing a device for thermal management of battery cells of a battery.

The method comprises the steps of:
- Providing S1 two parts, in particular two half-shells 2a, 2b, wherein at least one of the parts comprises at least in part a fluid channel 3,
- Materially bonding S2 said two parts 2a, 2b, in particular by welding,
- Providing S3 said at least one fluid channel 3 such to provide a fluid flow 12 in at least one direction, preferably in at least two directions, preferably in at least three directions, parallel to a main direction of extension 100 of said polymer element 2, in particular wherein at least two of said two, preferably at least three, directions are parallel to each other,
- Providing S4 an inlet 3a and an outlet 3b for said at least one fluid channel 3.

At least one embodiment may provide at least one of the following features and/or at least one of the following advantages:
- Easy and less cost-intensive manufacturing.
- Reduced construction space.
- Reliable operation.
- High integration level.
- Flexibility in terms of functionality.
- Easy placement of the device respective the battery cells.
- A larger contact area of the surface for the thermal management.
- Flexible and sufficient thermal management.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: Device
- 2, 2A, 2B, 2C, 2D, 2E: Polymer element
- 2a, 2b: Half shell
- 3: Fluid channel
- 3a: Inlet
- 3b: Outlet
- 4: Heating device
- 5: Metal tracks
- 6: Meander-shaped form
- 7a, 7b: Loops
- 8a, 8b: Diameter
- 9: Wall
- 10a, 10b: Concave form
- 11: Pattern
- 12: Flow
- 13: Ribs
- 14: Base
- 15: Mounting seat
- 16: Rounded openings

- 100: Main direction of extension
- 101: Direction of flow
- 200: Battery system
- 201: Battery management system
- 202: Battery cell

- S1-S4: Steps of a method

## Claims

1. Device (1) for thermal management of battery cells (202) of a battery, comprising
at least one polymer element (2, 2A, 2B, 2C, 2D, 2E), comprising one or more polymers, in particular thermoplastic, wherein said at least one polymer element (2, 2A, 2B, 2C, 2D, 2E) comprises at least one fluid channel (3) having an inlet (3a) and an outlet (3b), wherein said at least one fluid channel (3) is adapted such to provide a fluid flow (12) in at least one direction, preferably in at least two directions, preferably in at least three directions, parallel to a main direction of extension (100) of said at least one polymer element (2, 2A, 2B, 2C, 2D, 2E), in particular wherein at least two of said at least three directions are parallel to each other.

2. Device (1) according to claim 1, **characterized in that** said at least one polymer element (2, 2A, 2B, 2C, 2D, 2E) comprises at least one heating element (4), preferably wherein said heating element (4) comprises at least one metal track (5) for carrying electric current.

3. Device (1) according to claim 2, **characterized in that** said at least one heating element (4) is meander-shaped (6), preferably wherein said at least one meander-shaped heating element (4) comprises loops (7a, 7b) of at least two different diameters (8a, 8b).

4. Device (1) according to one of the claims 1-3, **characterized in that** said at least one polymer element (2, 2A, 2B, 2C, 2D, 2E) is shaped such that at least 20%, preferably at least 30%, preferably at least 40%, preferably at least 50%, preferably at least 60%, preferably at least 70%, preferably at least 80%, preferably at least 90%, preferably covering all of a circumferential surface of a battery cell (202).

5. Device (1) according to one of the claims 2-4, **characterized in that** said at least one heating element (4) is provided in a wall (9) of said at least one polymer element (2, 2A, 2B, 2C, 2D, 2E).

6. Device (1) according to one of the claims 1-5, **characterized in that** said at least one polymer element (2, 2A, 2B, 2C, 2D, 2E) comprises at least two half-shells (2a, 2b), materially bonded to each other.

7. Device (1) according to claim 6, **characterized in that** said at least two half-shells (2a, 2b) are adapted to provide at least one fluid channel (3) between them.

8. Device (1) according to one of the claims 1-7, **characterized in that** said at least one polymer element (2, 2A, 2B, 2C, 2D, 2E) comprises curved side walls (9) extending along the at least one direction.

9. Device (1) according to one of the claims 1-8, **characterized in that** said curved side walls (9) have concave form, in particular having a regular pattern (11) of concave sections (10a, 10b) along the main direction of extension (100).

10. Device (1) according to claim 9, **characterized in that** sides of said at least one polymer element (2, 2A, 2B, 2C, 2D, 2E) opposite to each other along the main direction of extension (100) have concave sections (10a, 10b) displaced from one another.

11. Battery comprising a plurality of battery cells (202) and at least a device (1) according to one of the claims 1-10.

12. Battery according to claim 11, **characterized in that** a base (14) for holding the battery cells (202) is provided, wherein said device (1) is arranged, in particular releasably, on said base (14), preferably said base (14) is integrally formed with said device (1).

13. Battery according to one of the claims 11-12, wherein said at least one polymer element (2, 2A, 2B, 2C, 2D, 2E) provides at least one mounting seat (15) for a side surface of a battery cell (202) along the main direction of extension of the battery cell (202).

14. Battery according to one of the claims 11-13, **characterized in that** said mounting seat (15) is shaped such that said mounting seat (15) covers at least 20%, preferably at least 30%, preferably at least 40%, preferably at least 50%, preferably at least 60%, preferably at least 70%, preferably at least 80%, preferably at least 90%, preferably all of a circumferential surface of a battery cell (202) when placed in said mounting seat (15).

15. Battery system (200), comprising a battery according to one of the claims 11-14 and a battery management system (201), said battery management system (201) being adapted to control provisioning of a coolant or heating fluid for the device (1), preferably based on a temperature of the battery.
